# EUROPÄISCHE PATENTSCHRIFT

(11) **EP 1 454 236 B1**
(45) Veröffentlichungstag und Bekanntmachung des Hinweises auf die Patenterteilung: **17.10.2007**
(21) Anmeldenummer: 02792647.6
(22) Anmeldetag: 06.12.2002
(51) Int. Cl.: G06F 11/00, H04L 12/26, H04L 29/06

(54) **Verfahren zum Vermeiden eines Totalausfalls einer Verarbeitungseinheit für Protokollinformationen**
Method for preventing total failure of a processing unit for protocol information
Procédé destiné à éviter une défaillance totale dans une unité de traitement pour informations de protocole

(30) Priorität: 13.12.2001 DE 10161295
(43) Veröffentlichungstag der Anmeldung: 08.09.2004
(73) Patentinhaber: NOKIA SIEMENS NETWORKS GMBH & CO. KG, 81541 München (DE)
(72) Erfinder: BURGER, Alfred, 84453 Mühldorf (DE); BRAZDRUM, Helmut, 85622 Feldkirchen (DE)
(86) Internationale Anmeldenummer: PCT/DE2002/004500
(87) Internationale Veröffentlichungsnummer: WO 2003/054700

(56) Entgegenhaltungen:
- DE-A- 19 921 247
- US-B1- 6 269 478

## Beschreibung

Die Erfindung betrifft ein Verfahren zum Vermeiden eines Totalausfalls in einer Verarbeitungseinheit zum Senden und Empfangen von Protokollinformationen, sowie eine Verarbeitungseinheit zum Senden und Empfangen von Protokollinformationen.

Der generelle Hintergrund der vorliegenden Erfindung ist eine Verarbeitungseinheit, welche die von einem Protokoll (z.B.: SSCOP, #7, HDLC, internes Transportprotokoll etc.) benötigten Informationen sendet und empfängt. Derartige Verarbeitungseinheiten sind in vielen Netzwerken integriert, um den Datentransfer innerhalb des Netzes zu ermöglichen.

Durch die technische Entwicklung werden die Anforderungen an die Verarbeitungseinheiten immer höher. Beispielsweise muß das Senden und Empfangen von Protokollinformationen in immer kürzeren Zeiteinheiten erfolgen. Dies kann einerseits durch eine Minimierung der Zeit, die für einen Übertragungsvorgang benötigt wird, und anderseits durch eine Erhöhung der Anzahl der Übertragungskanäle erreicht werden.

Zur Minimierung der Zeit, die für einen Übertragungsvorgang benötigt wird, werden die Protokollinformationen über eine hochleistungsfähige Vermittlungstechnik wie z.B. dem Asynchronen Transfermodus (ATM) transportiert.

Die Erhöhung der Anzahl der Übertragungskanäle in einer Verarbeitungseinheit zum Senden und Empfangen von Protokollinformationen (zur Zeit ca. 16000) führt ggf. zu Verwaltungsproblemen, da es nahezu unmöglich ist, eine entsprechende Anzahl von Übertragungskanäle auf herkömmliche Weise zu unterstützen.

Um alle Kanäle unterstützen zu können, muß eine Realisierung des Protokolls in der Hardware z.B. über einen ASIC (Application Specific Integrated Circuits) und/oder ein FPGA (Field Programmable Gate Arrays) erfolgen.

ASIC sind Spezialchips, die auf den konkreten Einsatz hin konzipiert und optimiert werden, um hohe Leistungsfähigkeit zu erreichen.

Um das Schaltungsdesign dieser Chips zu optimieren, hat in den letzten Jahren eine Entwicklung weg von dem klassischen digitalen Schaltungsdesign mit Standardlogik (74xx) hin zu programmierbarer Logik stattgefunden. Dabei hat speziell FPGA an Bedeutung gewonnen.

Die Kombination von ATM und ASIC zur Informationsübertragung wird schon seit Ende der neunziger Jahre durchgeführt. Sie wird z. B. erfolgreich im digitalen Telefonvermittlungssystem EWSD (Elektronisches Wählsystem Digital) verwendet.

Bei der Informationsübertragung ist über einen sogenannten Worksplit definiert, welchen Protokollanteil der ASIC und welchen Protokollanteil die nachfolgende Software im Prozessor auf der Baugruppe bearbeitet.

Netzwerke werden in der Regel vor der eigentlichen Nutzdatenübertagung ausgetestet. Es ist indessen auf Grund der Komplexität der Protokolle nicht möglich, die Bearbeitung aller Situationen im vorhinein auszutesten. Dadurch bleibt immer eine gewisse Fehlerwahrscheinlichkeit übrig. Dies bedeute, daß unter Umständen fehlerhafte Protokoll-Informationen empfangen werden, die zum Totalausfall des Systems führen. Dabei werden auch die anderen Übertragungskanäle in Mitleidenschaft gezogen.

Tritt in einem ASIC ein Fehler auf, so treten potentiell folgende Probleme bei der Fehlerkorrektur auf:
- die Fehlerlokalisierung in einem komplexen ASIC ist äußerst schwierig,
- eine sofortige Fehlerbeseitigung ist nicht, bzw. nur durch ein Redesign, möglich, und
- die Protokoll-Bearbeitung kann nur durch ein Rücksetzen der Hardware wieder gestartet werden.

Daraus ergibt sich der Bedarf für ein Verfahren welches einen Totalausfall ("deadlock") bei der Protokoll-Bearbeitung vermeidet.

Aus der US Patentschrift US-B1-6 269 478 ist ein Verfahren zum Vermeiden eines Totalausfalls in einer Verarbeitungseinheit zum Senden und Empfangen von Protokollinformationen für mehreren Übertragungskanäle bekannt.

Der Erfindung liegt dementsprechend die Aufgabe zugrunde, ein Verfahren zu entwickeln, welches einen Totalausfall bei der Protokoll-Bearbeitung vermeidet.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Zentrale Erkenntnis der Erfindung ist es, ein Verfahren zum Vermeiden eines Totalausfalls in einer Verarbeitungseinheit zum Senden und Empfangen von Protokollinformationen für eine große Anzahl von Übertragungskanäle dadurch zu erreichen, daß für jedes Protokoll von einem Controller ein Protokoll-Prozeß gestartet wird und für jeden Protokoll-Prozeß parallel dazu ein separater Überwachungsprozeß aktivierbar ist, der zeitgleich zu dem Protokoll-Prozeß gestartet wird und die zeitliche Dauer des Protokoll-Prozesses zur Erkennung eines fehlerhaften Übertragungskanals überwacht. Der Fehlerhafte Übertragungskanals wird sofort gesperrt.

Desweiteren ist es notwendig, daß für jeden Protokoll-Prozeß der Überwachungsprozeß von der Software separat aktivierbar und deaktivierbar ist.

Vorteilhafterweise meldet der Überwachungsprozeß an den Controller, wenn eine vorab festgelegte zeitliche Dauer des Protokoll-Prozesses überschritten ist. In diesem Fall muß von einer fehlerhaften Protokoll-Information ausgegangen werden mit der die Protokoll-Bearbeitung in einen "deadlock"-Zustand gelangt.

Besonders vorteilhaft ist, wenn die Dauer des Überwachungsprozesses für jeden Protokoll-Prozeß getrennt einstellbar ist, da die verschiedenen Prozesse unterschiedliche Zeit beanspruchen. Alternativ ist auch die Festlegung der Dauer aller Überwachungsprozesse auf die maximal mögliche Prozeßdauer möglich. Dies bewirkt aber eine unnötige Zeitverzögerung beim Erkennen von fehlerhaften Protokoll-Informationen.

Zur Steuerung der zeitlichen Dauer des Überwachungsprozesses ist eine Zeitbasis in der Verarbeitungseinheit integriert, die einen Grundtakt vorgibt.

Erfindungsgemäß sichert der Controller die zum späteren Lokalisieren des Fehlers relevanten Daten, sobald eine Meldung des Überwachungsprozesses, daß die Dauer des Protokoll-Prozesses die vorab festgelegte Zeit überschreitet, an ihn erfolgt. Die relevanten Daten umfassen den Namen des Protokollprozesses, den augenblicklichen Zustand des Protokoll-Prozesses und/oder weitere Signalzustände. Sie werden in Registern gespeichert.

Danach setzt der Controller die Verarbeitungseinheit zurück, wobei die Daten die zum späteren lokalisieren des Fehlers gespeichert sind erhalten bleiben.

Nach dem Rücksetzvorgang startet der Controller einen Prozeß, der die zuletzt empfangene, das Fehlverhalten auslösende Nachricht aus dem Empfangsspeicher ausliest und zusammen mit den gespeicherten Daten zur Fehlerlokalisation an eine externe Software weitergibt.

Danach ist die Verarbeitungseinheit zur Bearbeitung der nächsten Nachricht bereit und es kommt somit nicht zum Totalausfall.

Zusätzlich wird der fehlerhafte Übertragungskanal der Verarbeitungseinheit gesperrt und kann nur von der Software nach erfolgter Fehlerbeseitigung wieder freigegeben werden.

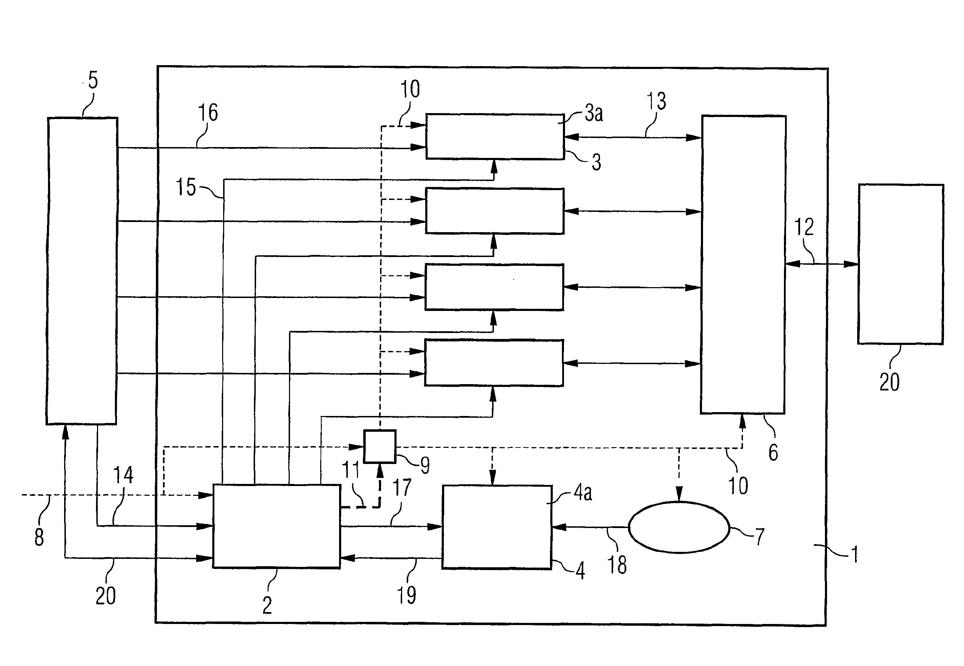

Ein Beispiel für den Ablauf der Verarbeitung der Protokoll-Informationen nach der Erfindung wird im folgenden anhand von Fig. 1 erläutert.

Die Protokoll-Informationen werden z.B. in ATM-Zellen an eine Verarbeitungseinheit 1 übertragen. Auf der Empfangsseite der Verarbeitungseinheit 1 befindet sich dafür eine Hardware-Einheit zur Bearbeitung der empfangenen Protokoll-Informationen. Im vorliegenden Fall handelt es sich um ein RA (Recive ATM Adaptation Layer).

Die empfangenen Protokoll-Informationen werden in einem Empfangsspeicher 5 zwischengespeichert. Die Speicherverwaltung sendet ein Signal 14 an den Controller 2, daß eine Information zu bearbeiten ist. Dieser entscheidet dann anhand eines Steuerwortes (Protokoll-Modus), für welches Protokoll 3 diese Nachricht bestimmt ist. Für jedes Protokoll 3 gibt es einen eigenen Prozeß, der von dem Controller 2 über ein Startsignal 15 gestartet wird. Der Protokoll-Prozeß 3a bearbeitet die Informationen und übergibt dann alle relevanten Daten über ein Signal 13 an eine Bus-Schnittstelle 6, die es ihrerseits an eine nachfolgende Software im Prozessor auf der Baugruppe zur weiteren Verarbeitung über ein Signal 12 weiterleitet.

Zur Zeitüberwachung des Protokoll-Prozesses 3a wird parallel zeitgleich dazu in einer Überwachungseinheit 4 ein Überwachungs-Prozeß 4a mittels eines Startsignals 17 gestartet. Die zulässige Höchstdauer des Überwachungs-Prozesses wird individuell für jeden Protokoll-Prozeß 4a festgelegt. Sie wird zur Zeitoptimierung auf die Zeit die der Protokoll-Prozeß 3a bei fehlerlosen Bearbeitung benötigt festgelegt. Zur Steuerung der Dauer der Überwachungszeit erhält der Überwachungs-Prozeß 4a einen Grundtakt 18 von einer Zeitbasis 7.

Beendet der Protokoll-Prozeß 3a seine Arbeitsschritte, so signalisiert er dies dem Controller 2, der dann den Überwachungs-Prozeß 4a stoppt. Aus diesem Grund ist es unabdingbar, daß jeder Überwachungs-Prozeß 4a separat deaktivierbar ist. Danach wird der Speicherverwaltung des Empfangsspeichers 5 gemeldet, daß die Informationen bearbeitet worden sind und somit die nächste Nachricht bearbeitet werden kann.

Wird der Überwachungs-Prozeß 4a beendet, bevor der Protokoll-Prozeß 3a beendet ist, so muß von einer fehlerhaften Protokoll-Information ausgegangen werden, mit der die Protokollbearbeitung in einen "deadlock"-Zustand gelangt.

Der Überwachungs-Prozeß 4a meldet in diesem Fall an den Controller 2 durch eine Fehlerbenachrichtigung 19 das Vorliegen einer fehlerhaften Protokoll-Information. Daraufhin sichert der Controller 2 alle relevanten Daten, wie Name des Protokoll-Prozesses, der den Fehler verursacht hat, den augenblicklichen Zustand des Protokoll-Prozesses um die Fehlerursache zu lokalisieren und/oder weitere Signalzustände abhängig vom jeweiligen Protokoll in Registern.

Danach setzt der Controller 2 die gesamte Einheit zurück, wobei die Daten erhalten werden, die zum späteren Lokalisieren des Fehlers gespeichert sind. Somit werden der Protokoll-Prozeß 3a, die Überwachungseinheit 4, die Zeit-Basis 7 und die Bus-Schnittstelle 6 zurückgesetzt. Dies kann z.B. dadurch erreicht werden, daß das Rücksetzsignal 10 durch eine ODER-Schaltung 9 erzeugt wird, der das Ausgangsignal 11 des Controllers 2 sowie das externe Rücksetzsignal 8 zugeführt werden.

Nach dem Rücksetzvorgang startet der Controller 2 einen Prozeß 3, der die zuletzt empfangene, das Fehlverhalten auslösende Nachricht aus dem Empfangsspeicher 5 über eine Signal 16 ausliest und zusammen mit den gespeicherten Daten zu Fehlerlokalisation an die externe Software 20 weitergibt.

Danach wird der Speicherverwaltung des Empfangsspeichers 5 signalisiert, daß die Informationen bearbeitet worden sind und die nächste Nachricht bearbeitet werden kann.

Zusätzlich wird der fehlerhafte Übertragungskanal sofort durch die Software 20 oder Hardware gesperrt und kann nur von der Software 20 nach erfolgter Fehlerbeseitigung wieder freigegeben werden.

Die Erfindung ermöglicht somit einen Totalausfall in einer Verarbeitungseinheit im Falle einer fehlerhaften Protokoll-Information zu vermeiden und die Fehlerursache zu ermitteln.

## Patentansprüche

1. Verfahren zum Vermeiden eines Totalausfalls
in einer Verarbeitungseinheit (1) zum Senden und Empfangen von Protokollinformationen für mehrere Übertragungskanäle, bei dem für jedes Protokoll (3) von einem Controller (2) ein Protokoll-Prozeß (3a) gestartet wird und parallel zu jedem Protokoll-Prozeß (3a) ein separater Überwachungsprozeß (4a) aktiviert bzw. deaktiviert wird, der zeitgleich zu dem Protokoll-Prozeß (3a) gestartet wird und die zeitliche Dauer des Protokoll-Prozesses (3a) zur Erkennung eines fehlerhaften Übertragungskanals überwacht, wobei der Überwachungsprozeß (4a) eine Nachricht an den Controller (2) sendet, sobald eine vorab festgelegte zeitliche Dauer des Protokoll-Prozesses (3a) überschritten ist, und der Controller (2) nach Erhalten dieser Nachricht zum späteren Lokalisieren des Fehlers relevante Daten speichert, die Verarbeitungseinheit zurücksetzt, wobei die Daten, die zum späteren Lokalisieren des Fehlers gespeichert sind, erhalten werden, und nach dem Rücksetzvorgang einen Prozeß startet, der die zuletzt empfangene, das Fehlverhalten auslösende Nachricht aus dem Empfangsspeicher (5) ausliest und zusammen mit den gespeicherten Daten zur Fehlerlokalisation an eine externe Software (20) weitergibt,
**dadurch gekennzeichnet,**
**dass** der fehlerhafte Übertragungskanal sofort gesperrt wird.

2. Verfahren nach Anspruch 1,
**dadurch gekennzeichnet,**
**dass** die Dauer des Überwachungsprozesses (4a) für jeden Protokoll-Prozeß (3a) getrennt eingestellt wird.

3. Verfahren nach Anspruch 2,
**dadurch gekennzeichnet,**
**dass** die zeitliche Dauer des Überwachungsprozesses (4a) aufgrund eines Grundtaktes, den eine Zeitbasis (7) vorgibt, gemessen wird.

4. Verfahren nach Anspruch 1,
**dadurch gekennzeichnet,**
**dass** die relevanten Daten den Namen des Protokoll-Prozesses (3a), den augenblicklichen Zustand des Protokoll-Prozesses (3a) und/oder weitere Signalzustände umfassen.

5. Verfahren nach Anspruch 1 oder 4,
**dadurch gekennzeichnet,**
**dass** eine Software (20) den fehlerhaften Übertragungskanal nach erfolgter Fehlerbeseitigung freigibt.

6. Verarbeitungseinheit zum Senden und Empfangen von Protokollinformationen für mehrere Übertragungskanäle,
aufweisend einen Controller (2), der für jedes Protokoll einen Protokoll-Prozeß (3a) startet, sowie eine Überwachungseinheit (4), in der zeitgleich zu jedem Protokoll-Prozeß (3a) ein separater Überwachungsprozeß (4a) aktivierbar bzw. deaktivierbar ist, der zur Erkennung eines fehlerhaften Übertragungskanals die zeitliche Dauer des Protokoll-Prozesses (3a) überwacht, und die eine Nachricht an den Controller (2) sendet, sobald eine vorab festgelegte zeitliche Dauer des Protokoll-Prozesses (3a) überschritten ist, wobei der Controller (2) derart ausgestaltet ist, dass der Controller (2) nach Erhalten dieser Nachricht zum späteren Lokalisieren des Fehlers relevante Daten speichert, die Verarbeitungseinheit zurücksetzt, wobei die Daten, die zum späteren Lokalisieren des Fehlers gespeichert sind, erhalten werden, und nach dem Rücksetzvorgang einen Prozeß startet, der die zuletzt empfangene, das Fehlverhalten auslösende Nachricht aus dem Empfangsspeicher (5) ausliest und zusammen mit den gespeicherten Daten zur Fehlerlokalisation an eine externe Software (20) weitergibt, **dadurch gekennzeichnet,**
**dass** der fehlerhafte Übertragungskanal sofort gesperrt wird.

7. Verarbeitungseinheit nach Anspruch 6,
**dadurch gekennzeichnet,**
**dass** der Controller (2) derart ausgestaltet ist, dass der Controller (2) die das Fehlverhalten auslösende Nachricht und die gespeicherten Daten über eine Bus-Schnittstelle (6) an die externe Software weitergibt.

8. Verarbeitungseinheit nach Anspruch 6 oder 7,
**dadurch gekennzeichnet,**
**dass** sie eine Zeitbasis (7) aufweist, die einen Grundtakt vorgibt, aufgrund dessen die zeitliche Dauer des Überwachungs-Prozesses (4a) gemessen wird.

9. Verarbeitungseinheit nach Anspruch 6, 7 oder 8,
**dadurch gekennzeichnet,**
**dass** der Controller (2) mit dem externen Rücksetzsignal (8) über eine ODER-Schaltung (9) verbunden ist.

10. Verarbeitungseinheit nach einem der Ansprüche 6 bis 9,
**dadurch gekennzeichnet,**
**dass** die externe Software (20) den fehlerhaften Übertragungskanal nach der Fehlerbeseitigung freigibt.

## Claims

1. Method for avoiding a total failure in a processing unit (1) for transmitting and receiving protocol information for a number of transmission channels, in which, for each protocol (3), a protocol process (3a) is started by a controller (2) and in parallel to each protocol process (3a) a separate monitoring process (4a) is activated or deactivated which is started at the same time as the protocol process (3a) and monitors the duration of the protocol process (3a) for detection of a faulty transmission channel, with the monitoring process (4a) sending a message to the controller (2) as soon as a predetermined duration of the protocol process (3a) is exceeded and the controller (2), after receiving this message, storing relevant data for later localization of the error type, resetting the processing unit, with the data which is stored for subsequent localization of the error type being retained, and after the reset operation starting a process which reads out from the receive memory (5) the last received message triggering the faulty behaviour and forwards it together with the stored data for error localization to external software (20), **characterized in that** the faulty transmission channel is immediately blocked.

2. Method in accordance with claim 1,
**characterised in that**
the duration of the monitoring process (4a) is set separately for each protocol process (3a).

3. Method in accordance with claim 2,
**characterised in that**
the duration of the monitoring process (4a) is measured on the basis of a basic clock which is predetermined by a time base (7).

4. Method in accordance with claim 1,
**characterised in that**
the relevant data includes the name of the protocol process (3a), the current state of the protocol process (3a) and/or further signal states.

5. Method in accordance with claim 1 or 4,
**characterised in that**
software (20) releases the faulty transmission channel after the error has been rectified.

6. Processing unit for transmitting and receiving protocol information for a number of transmission channels,
featuring a controller (2), which for each protocol starts a protocol process (3a), as well as a monitoring unit (4), in which, at the same time as each protocol process (3a) a separate monitoring process (4a) is able to be activated or deactivated, which monitors the duration of the protocol process (3a) in order to detect a faulty transmission channel (3a), and which sends a message (2) to the controller as soon as a duration of the protocol process (3a) defined in advance is exceeded, with the controller (2) being embodied such that the controller (2), after receiving this message, stores data relevant to the subsequent localization of the error type, resets the processing unit, with the data stored for the subsequent localization of the error being retained, and after the reset operation starts a process which reads out the last received message which triggered the malfunction from the receive memory (5) and forwards it together with the stored data for error localization to external software (20),
**characterized in that**,
the faulty transmission channel is immediately blocked.

7. Processing unit in accordance with claim 6,
**characterised in that**
the controller (2) is embodied such that the controller (2) forwards the message triggering the malfunction and the stored data over a bus interface (6) to the external software.

8. Processing unit in accordance with claim 6 or 7,
**characterised in that**
it features a time base (7) which specifies a basic clock on the basis of which the duration of the monitoring process (4a) is measured.

9. Processing unit in accordance with claim 6, 7 or 8,
**characterised in that**
the controller (2) is connected to the external reset signal (8) via an OR circuit (9).

10. Processing unit in accordance with one of the claims 6 to 9,
**characterised in that**
the external software (20) releases the faulty transmission channel after the error has been rectified.

## Revendications

1. Procédé destiné à éviter une défaillance totale dans une unité de traitement (1) permettant d'émettre et de recevoir des informations de protocole pour plusieurs canaux de transmission, dans lequel un processus de protocole (3a) est démarré par un contrôleur (2) pour chaque protocole (3) et dans lequel, parallèlement à chaque processus de protocole (3a), un processus de surveillance (4a) séparé est activé resp. désactivé, qui est démarré en même temps que le processus de protocole (3a) et surveille la durée temporelle du processus de protocole (3a) pour identifier un canal de transmission défectueux, dans lequel le processus de surveillance (4a) émet un message au contrôleur (2) dès qu'une durée temporelle, déterminée auparavant, du processus de protocole (3a) est dépassée, et le contrôleur (2), après la réception de ce message, mémorise des données importantes pour la localisation ultérieure de l'erreur, remet l'unité de traitement à zéro, les données mémorisées pour la localisation ultérieure de l'erreur, étant reçues, et démarre, après l'opération de remise à zéro, un processus qui, à partir de la mémoire de réception (5), lit le message reçu en dernier déclenchant le comportement erroné, et le transmet, avec les données mémorisées, à un logiciel externe (20) pour la localisation de l'erreur,
**caractérisé en ce**
**que** le canal de transmission défectueux est immédiatement bloqué.

2. Procédé selon la revendication 1,
**caractérisé en ce**
**que** la durée du processus de surveillance (4a) est réglée de manière séparée pour chaque processus de protocole (3a).

3. Procédé selon la revendication 2,
**caractérisé en ce**
**que** la durée temporelle du processus de surveillance (4a) est mesurée en raison d'une cadence de base qui indique une base de temps (7) .

4. Procédé selon la revendication 1,
**caractérisé en ce**
**que** les données importantes comprennent le nom du processus de protocole (3a), l'état momentané du processus de protocole (3a) et/ou d'autres états de signaux.

5. Procédé selon la revendication 1 ou 4,
**caractérisé en ce**
**qu'**un logiciel (20) libère le canal de transmission défectueux une fois que l'erreur a été éliminée.

6. Unité de traitement permettant d'émettre et de recevoir des informations de protocole pour plusieurs canaux de transmission,
présentant un contrôleur (2) qui démarre un processus de protocole (3a) pour chaque protocole, ainsi qu'une unité de surveillance (4), dans laquelle un processus de surveillance (4a) séparé est activable resp. désactivable en même temps que chaque processus de protocole (3a), qui surveille la durée temporelle du processus de protocole (3a) pour identifier un canal de transmission défectueux, et qui émet un message au contrôleur (2) dès qu'une durée temporelle, déterminée auparavant, du processus de protocole (3a) est dépassée, le contrôleur (2) étant conçu de telle manière que le contrôleur (2), après la réception de ce message, mémorise des données importantes pour la localisation ultérieure de l'erreur, qu'il remet l'unité de traitement à zéro, les données mémorisées pour la localisation ultérieure de l'erreur étant reçues, et qu'après l'opération de remise à zéro, il démarre un processus qui, à partir de la mémoire de réception (5), lit le message reçu en dernier, déclenchant le comportement erroné, et le transmet à un logiciel externe (20) avec les données mémorisées pour la localisation de l'erreur, **caractérisée en ce**
**que** le canal de transmission défectueux est immédiatement bloqué.

7. Unité de traitement selon la revendication 6,
**caractérisée en ce**
**que** le contrôleur (2) est exécuté de telle manière que le contrôleur (2) transmet au logiciel externe le message déclenchant le comportement erroné et les données mémorisées, par l'intermédiaire d'une interface de bus (6).

8. Unité de traitement selon la revendication 6 ou 7,
**caractérisée en ce**
**qu'**elle présente une base de temps (7) indiquant une cadence de base, en raison de laquelle la durée temporelle du processus de surveillance (4a) est mesurée.

9. Unité de traitement selon la revendication 6, 7 ou 8,
**caractérisée en ce**
**que** le contrôleur (2) est raccordé au signal externe de remise à zéro (8) par l'intermédiaire d'un circuit OU (9).

10. Unité de traitement selon l'une quelconque des revendications 6 à 9,
**caractérisée en ce que** le logiciel externe (20) libère le canal de transmission défectueux après l'élimination de l'erreur.
